# EUROPEAN PATENT SPECIFICATION

(11) **EP 3 385 417 B1**
(45) Date of publication and mention of the grant of the patent: **06.05.2020**
(21) Application number: 17178362.4
(22) Date of filing: 28.06.2017
(51) Int. Cl.: D03D 1/00, D03D 3/02, D03D 11/02, A62B 35/00

(54) **WOVEN MESH AND SAFETY WAIST PROTECTION BELT THEREOF**
GEWEBTES NETZ UND SICHERHEITSLEIBSCHUTZGURT DARAUS
MAILLE TISSÉE ET SA CEINTURE VENTRALE DE PROTECTION DE SÉCURITÉ

(30) Priority: 06.04.2017 CN 201710220511
(43) Date of publication of application: 10.10.2018
(73) Proprietor: Polyunion Textile (Shenzhen) Factory, Shenzhen city 518000 (CN)
(72) Inventor: Li, Yongda, Shenzhen city, 518000 (CN)
(74) Representative: Sach, Greg Robert

(56) References cited:
- WO-A1-2016/075425
- FR-A1- 2 956 980
- US-A1- 2016 375 278

## Description

### TECHNICAL FIELD

The present invention relates to the technical field of waist protection belts, in particular to a woven mesh and a safety waist protection belt thereof.

### BACKGROUND

Most of safety waist protection belts for rock climbing in the prior art are processed and manufactured through a manner of overlapping and sewing multiple layers of fabrics. The safety waist protection belts processed in such a manner have larger volumes and heavier weight, and have poor integration due to many sewing positions so sewing parts are easy to break. Although some safety waist protection belts are provided with woven meshes, weaving structures of the woven meshes are traditional, are easy to generate large knots at nodes and are unsuitable to be laid in the safety waist protection belts for use.

Following patent documents disclose some other conventional woven mesh and safety waist protection belt.

The international application [WO 2016/075425 A1 (MARATHON BELTING LTD [GB]) 19 May 2016] discloses a multi-channel protective cover including a multi-ply woven tubular structure that is openable in use to provide at least two adjacent, woven-in sleeves. The sleeves are each adapted to accommodate one of the elongate structures and separated from one at one or more locations A by a seam formed by at least one serpentine stitcher thread that is woven between the plies of the structure during weaving of the structure.

The patent application [FR 2 956 980 A1 (ZEDEL [FR]) 9 September 2011 (2011-09-09)] discloses a tie-in harness, which is provided with a bundle of resistance threads mounted on the surface of a support belt in engagement with spreaders to distribute the pulling forces applied to the various spaced threads. The bundle of threads forms a plurality of basic loops connected to runners arranged at opposite ends of the support belt enabling a relative sliding movement of the threads to balance the pulling forces.

### SUMMARY

The present invention aims at providing a woven mesh and a safety waist protection belt which are safe, reliable, convenient to wear and light in weight.

In order to achieve the purpose, the present invention adopts the following technical solution:
A woven mesh comprises a plurality of parallel safety ropes and mesh sleeves which are integrally woven and sleeved on the periphery of the safety ropes. A plurality of tight joint segments are sequentially arranged between adjacent safety ropes at intervals in a length direction, and the adjacent mesh sleeves at the tight joint segments are integrally woven.

Two side edges of the woven mesh are tightly jointed to a plurality of safety ropes in parallel, and the adjacent mesh sleeves of the plurality of safety ropes are all integrally woven.

The adjacent tight joint segments are all in a same straight line.

The woven mesh comprises a mesh hole expanding segment arranged at a middle part and mesh hole closing segments arranged on two sides of the mesh hole expanding segment.

Each mesh hole closing segment is provided with a sewing thread in a width direction, and the adjacent safety ropes of each mesh hole closing segment are tightly jointed with one another in parallel sequentially.

A safety waist protection belt comprises the above woven mesh, a face fabric layer, a lining layer, covered edges arranged at an edge of the face fabric layer and an edge of the lining layer and hollow woven belts extending from two ends of the safety waist protection belt, wherein the face fabric layer and the lining layer are arranged on a front surface and a back surface of the woven mesh, and mesh hole closing segments of the woven mesh are penetrated in cavities of the hollow woven belts.

The safety waist protection belt is provided with a plurality of arc-shaped hanging rings used for hanging climbing instruments sequentially in the length direction.

The lining layer is arranged to be a breathable mesh.

Two side edges of the mesh hole expanding segments of the woven mesh are fastened to the side edges of the face fabric layer and the lining layer through the sewing threads of the covered edges.

The present invention has the beneficial effects that: the present invention provides the woven mesh which comprises a plurality of parallel safety ropes and the mesh sleeves which are integrally woven and sleeved on the periphery of the safety ropes; a plurality of tight joint segments are sequentially arranged between the adjacent safety ropes at intervals in the length direction respectively; and the adjacent mesh sleeves at the tight joint segments are integrally woven. The woven mesh designed with such a structure has high tensile strength, and a larger knot may not exist at a node of the woven mesh. Meanwhile, the present invention also provides a safety waist protection belt which comprises the above woven mesh, a face fabric layer, a lining layer, covered edges arranged at the edge of the face fabric layer and the edge of the lining layer and hollow woven belts extending from the two ends of the safety waist protection belt respectively, wherein the face fabric layer and the lining layer are arranged on the front surface and the back surface of the woven mesh respectively, and mesh hole closing segments of the woven mesh are penetrated in cavities of the hollow woven belts. The safety waist protection belt designed with such a structure is light in weight, high in tensile strength and comfortable to wear.

### BRIEF DESCRIPTION OF DRAWINGS

Fig. 1 is a planar structural schematic diagram of a safety waist protection belt of the present invention.
Fig. 2 is a section view of section AA in Fig. 1.
Fig. 3 is a planar structural schematic diagram when mesh holes of the woven mesh are not expanded in Fig. 1.
Fig. 4 is a structural schematic diagram after the mesh holes at B are expanded in Fig. 3.
Fig. 5 is a cross section view of woven mesh nodes in Fig. 3.

### DETAILED DESCRIPTION

The technical solution of the present invention will be further described below with combination of the drawings and through specific embodiments.

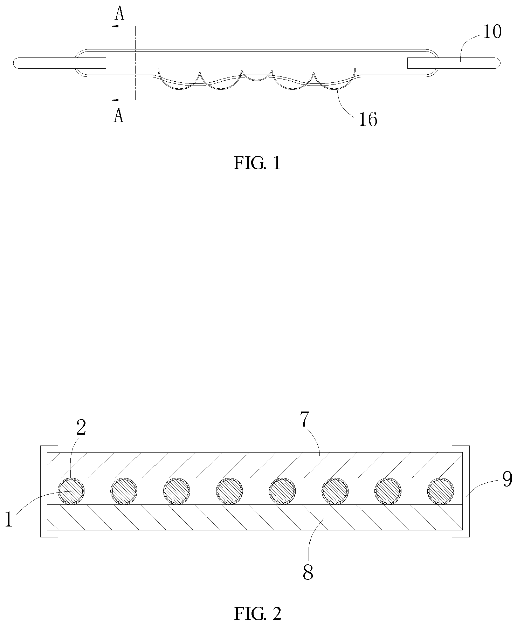

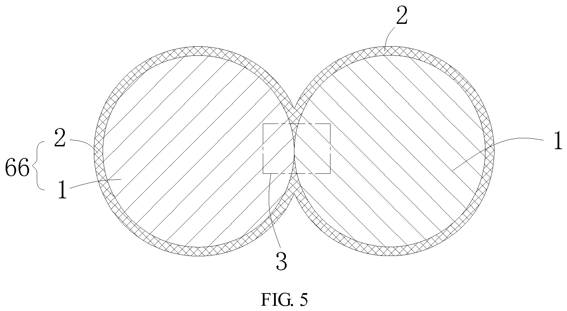

As shown in Figs. 1-5, the woven mesh in the present embodiment comprises a plurality of parallel safety ropes 1 and mesh sleeves 2 which are integrally woven and sleeved on the periphery of the safety ropes 1. A plurality of tight joint segments 3 are sequentially arranged between the adjacent safety ropes 1 at intervals in the length direction, and the adjacent mesh sleeves 2 at the tight joint segments 3 are integrally woven. With this structure design, the nodes of the woven mesh are formed at the tight joint segments. Because the tight joint segments 3 are fastened by integrally weaving the adjacent mesh sleeves 2, the disadvantage that larger knots are formed at the nodes during weaving of a traditional woven mesh is avoided. For the woven mesh which is woven in this manner, the adjacent tight joint segments 3 are all in the same straight line, and the whole woven mesh is arranged in a belt shape in a state that the mesh holes are not expanded. By weaving with the above structure, although a line diameter of each safety rope is thicker, a knot may not be formed at each node; and due to the action force of the mesh sleeves wrapping the peripheries of the safety ropes, the whole woven mesh can bear larger tensile strength and is very suitable for being used for the safety waist protection belt for rock climbing.

Specifically, in the present embodiment, in order to facilitate locking with other fabrics, the two side edges of the woven mesh are tightly jointed to a plurality of safety ropes 1 in parallel respectively, and the adjacent mesh sleeves 2 of the plurality of safety ropes 1 are all integrally woven.

The safety ropes provided with the mesh sleeves form safety rope units 66, and the mesh sleeves between the safety rope units 66 are integrally woven, so that the safety ropes at the two side edges of the woven mesh are tightly jointed with one another.

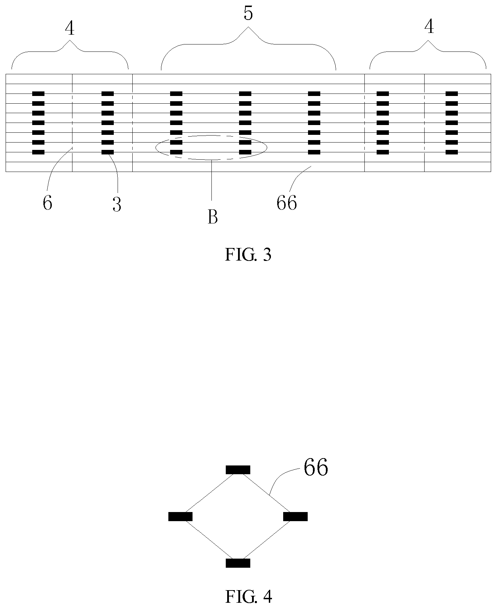

In the present embodiment, the woven mesh comprises the mesh hole expanding segment 5 arranged at the middle part and the mesh hole closing segments 4 arranged on the two sides of the mesh hole expanding segment 5. Each of the mesh hole closing segments 4 is provided with a sewing thread 6 along a width direction of the woven mesh, and the adjacent safety ropes 1 of each mesh hole closing segment 4 are tightly jointed with one another in parallel sequentially. With this structure design, a mesh hole surface with large area is formed at the middle part of the woven mesh, while an integral belt-shaped arrangement is formed at the two ends of the woven mesh. Such structure design is very suitable for being used for a safety waist protection belt product for rock climbing, enables the safety waist protection belt product to bear larger tensile strength and is good in breathability and light in weight. Expanding of the mesh holes in the mesh hole expanding segment 5 in the present embodiment is shown in Fig. 4.

A safety waist protection belt comprises the above woven mesh, the face fabric layer 7, the lining layer 8, the covered edges 9 arranged at the edge of the face fabric layer 7 and the edge of the lining layer 8 and hollow woven belts 10 extending from the two ends of the safety waist protection belt, wherein the face fabric layer 7 and the lining layer 8 are arranged on the front surface and the back surface of the woven mesh, the mesh hole closing segments 4 of the woven mesh are penetrated in cavities of the hollow woven belts 10, the safety waist protection belt is provided with a plurality of arc-shaped hanging rings 16 used for hanging the climbing instruments sequentially along the length direction, the lining layer 8 is arranged to be a breathable mesh, and the two side edges of the mesh hole expanding segment 5 of the woven mesh are fastened to the side edges of the face fabric layer 7 and the lining layer 8 through the sewing threads 6 of the covered edges 9.

For the safety waist protection belt with the above structure design, because the woven mesh with the above structure form is adopted between the face fabric layer and the lining layer, the weight and the volume of the safety waist protection belt are effectively lowered when the tensile strength of the safety waist protection belt is guaranteed; and because the woven mesh is good in breathability and the nodes are smooth without knots, the wearing comfort of a user is also greatly improved.

The technical principles of the present invention are described above in combination with the specific embodiments. The description is merely intended to explain the principles of the invention, but should not be interpreted as a limitation to the protection scope of the present invention in any way. Based upon the explanation, those skilled in the art may contemplate other specific embodiments of the present invention without paying creative labor, as long as these fall within the scope of the appended claims.

## Claims

1. A woven mesh, comprising a plurality of parallel safety ropes (1) and mesh sleeves (2) which are integrally woven and sleeved on the periphery of the safety ropes (1), wherein a plurality of tight joint segments (3) are sequentially arranged between adjacent safety ropes (1) at intervals in a length direction, and the adjacent mesh sleeves (2) at the tight joint segments (3) are integrally woven.

2. The woven mesh according to claim 1, wherein two side edges of the woven mesh are tightly jointed to a plurality of safety ropes (1) in parallel respectively, and the adjacent mesh (2) sleeves of the plurality of safety ropes (1) are all integrally woven.

3. The woven mesh according to claim 1, wherein the adjacent tight joint segments (3) are all in a same straight line.

4. The woven mesh according to claim 1, wherein the woven mesh comprises a mesh hole expanding segment (5) arranged at a middle part and mesh hole closing segments (4) arranged on two sides of the mesh hole expanding segment (5).

5. The woven mesh according to claim 4, wherein each of the mesh hole closing segments (4) is provided with a sewing thread (6) in a width direction, and the adjacent safety ropes (1) of each mesh hole closing segment (4) are tightly jointed with one another in parallel sequentially.

6. A safety waist protection belt, comprising the woven mesh of any one of claims 1-5, a face fabric layer (7), a lining layer (8), covered edges (9) arranged at an edge of the face fabric layer (7) and an edge of the lining layer (8) and hollow woven belts (10) extending from two ends of the safety waist protection belt, wherein the face fabric layer (7) and the lining layer (8) are arranged on a front surface and a back surface of the woven mesh, and mesh hole closing segments (4) of the woven mesh are penetrated in cavities of the hollow woven belts (10).

7. The safety waist protection belt according to claim 6, wherein the safety waist protection belt is provided with a plurality of arc-shaped hanging rings (16) used for hanging climbing instruments sequentially along a length direction.

8. The safety waist protection belt according to claim 6, wherein the lining layer (8) is arranged to be a breathable mesh.

9. The safety waist protection belt according to claim 6, wherein two side edges of the mesh hole expanding segment (5) of the woven mesh are fastened to the side edges of the face fabric layer (7) and the lining layer (8) through the sewing threads (6) of the covered edges (9).

## Patentansprüche

1. Gewebtes Netz, umfassend mehrere parallele Sicherheitsseile (1) und Netzhülsen (2), die den Umfang der Sicherheitsseile (1) ummanteln, und einstückig gewebt sind, und wobei mehrere enge Verbindungssegmente (3) nacheinander zwischen benachbarten Sicherheitsseilen (1) in Abständen in Längsrichtung angeordnet sind, und wobei die benachbarten Netzhülsen (2) an den straffen Verbindungssegmenten (3) einstückig gewebt sind.

2. Gewebtes Netz nach Anspruch 1, wobei zwei Seitenkanten des gewebten Netzes straff mit einer Vielzahl von Sicherheitsseilen (1) parallel verbunden sind und die benachbarten Netzhülsen (2) der Vielzahl von Sicherheitsseilen (1) alle einstückig gewebt sind.

3. Gewebtes Netz nach Anspruch 1, wobei die benachbarten straffen Verbindungssegmente (3) alle in derselben geraden Linie liegen.

4. Gewebtes Netz nach Anspruch 1, wobei das gewebte Netz ein Maschenloch-Ausdehnungssegment (5), das an einem Mittelteil angeordnet ist, und Maschenloch-Schließsegmente (4), die an zwei Seiten des Maschenloch-Ausdehnungssegments (5) angeordnet sind, aufweist.

5. Gewebtes Netz nach Anspruch 4, wobei jedes der Maschenloch-Schließsegmente (4) in Breitenrichtung mit einem Nähfaden (6) versehen ist und die benachbarten Sicherheitsseile (1) jedes Maschenloch-Schließsegments (4) der Reihe nach parallel dicht miteinander verbunden sind.

6. Sicherheitsgürtel zum Taillenschutz, umfassend das gewebte Netz nach einem der Ansprüche 1 bis 5, eine Oberstoffschicht (7), eine Futterschicht (8), abgedeckte Kanten (9), die an einer Kante der Oberstoffschicht (7) und einer Kante der Futterschicht (8) angeordnet sind, und hohle gewebte Gürtel (10), die sich von zwei Enden des Sicherheitsgürtels zum Taillenschutz erstrecken, wobei die Oberstoffschicht (7) und die Futterschicht (8) auf einer Vorderfläche und einer Rückseite des gewebten Netzes angeordnet sind, und Maschenloch-Schließsegmente (4) des gewebten Netzes in Hohlräume der hohlen gewebten Gürtel (10) eingedrungen sind.

7. Sicherheitsgürtel zum Taillenschutz nach Anspruch 6, wobei der Sicherheitsgürtel zum Taillenschutz mit einer Vielzahl von bogenförmigen Aufhängeringen (16), die zum sequentiellen Aufhängen von Kletterinstrumenten entlang einer Längenrichtung verwendet werden, versehen ist.

8. Sicherheitsgürtel zum Taillenschutz nach Anspruch 6, wobei die Futterschicht (8) so angeordnet ist, dass sie ein atmungsaktives Netz ist.

9. Sicherheitsgürtel zum Taillenschutz nach Anspruch 6, wobei zwei Seitenkanten des Maschenloch-Ausdehnungssegments (5) des gewebten Netzes an den Seitenkanten der Oberstoffschicht (7) und der Futterschicht (8) durch die Nähfäden (6) der abgedeckten Kanten (9) befestigt sind.

## Revendications

1. Maille tissée, comprenant une pluralité de cordes de sécurité (1) parallèles et de gaines de maille (2) qui sont tissées et gainées sur la périphérie des cordes de sécurité (1), dans laquelle une pluralité de segments de joints serrés (3) sont disposés l'un après l'autre entre des cordes de sécurité (1) adjacentes à intervalles dans une direction longitudinale, et les manchons de maille (2) adjacents disposés au droit des segments de joint serrés (3) sont intégralement tissés.

2. Maille tissée selon la revendication 1, dans laquelle deux bords latéraux de la maille tissée sont étroitement articulés sur une pluralité de cordes de sécurité (1) respectivement disposées en parallèle, et les manchons de maille (2) adjacents de la pluralité de cordes de sécurité (1) sont tous intégralement tissés.

3. Maille tissée selon la revendication 1, dans laquelle les segments (3) de joint serrés adjacents sont tous alignés selon la même ligne droite.

4. Maille tissée selon la revendication 1, dans laquelle la maille tissée comprend un segment d'expansion de trou de maille (5) disposé dans une partie centrale et des segments de fermeture de trou de maille (4) disposés sur deux côtés du segment d'expansion de trou de maille (5).

5. Maille tissée selon la revendication 4, dans laquelle chacun des segments de fermeture de trou de maille (4) est pourvu d'un fil de couture (6) dans un sens de largeur, et les cordes de sécurité (1) adjacentes de chaque segment de fermeture de trou de maille (4) sont étroitement articulées parallèlement l'une sur l'autre et l'une après l'autre.

6. Baudrier d'assurance ventral, comprenant la maille tissée selon l'une quelconque des revendications 1 à 5, une couche de tissu avant (7), une couche de garnissage (8), des bords couverts (9) disposés sur un bord de la couche de garnissage (8) et des ceintures tissées (10) creuses s'étendant à partir de deux extrémités du baudrier d'assurance ventral, dans lequel la couche de tissu avant (7) et la couche de garnissage (8) sont disposées sur une surface avant et une surface arrière de la maille tissée, et les segments de fermeture de trou de maille de la maille tissée (4) pénètrent dans les cavités des ceintures creuses tissées (10).

7. Baudrier d'assurance ventral selon la revendication 6, dans lequel le baudrier d'assurance ventral est pourvu d'une pluralité d'anneaux de suspension (16) cintrés servant à la suspension d'instruments d'escalade l'un après l'autre selon un sens longitudinal.

8. Baudrier d'assurance ventral selon la revendication 6, dans lequel la couche de garnissage (8) est prévue sous forme d'une maille respirable.

9. Baudrier d'assurance ventral selon la revendication 6, dans lequel deux bords latéraux du segment d'expansion de trou de maille (5) de la maille tissée sont fixés aux bords latéraux de la couche de tissu avant (7) et de la couche de garnissage (8) à travers les fils de couture (6) des bords couverts (9).
